# EUROPÄISCHE PATENTSCHRIFT

(11) **EP 0 734 039 B1**
(45) Veröffentlichungstag und Bekanntmachung des Hinweises auf die Patenterteilung: **27.05.1998**
(21) Anmeldenummer: 96104667.9
(22) Anmeldetag: 22.03.1996
(51) Int. Cl.: H01J 1/14, B23K 35/22

(54) **Emissionselektrode, bestehend aus einem Trägerkörper, der eine die Elektronenemission begünstigende, schmelzgesinterte Masse trägt**
Emission electrode comprising a carrier with a sintered electron emission promoting body
Electrode d'émission comprenant un support avec corps fritté améliorant l'émission d'électrons

(30) Priorität: 24.03.1995 DE 19510799
(43) Veröffentlichungstag der Anmeldung: 25.09.1996
(73) Patentinhaber: SIEMENS AKTIENGESELLSCHAFT, 80333 München (DE)
(72) Erfinder: Vojta, Erich, 91334 Hemhofen (DE); Lehner, Günter, 89949 Windach (DE)

(56) Entgegenhaltungen:
- EP-A- 0 197 455
- US-A- 3 970 888
- WELDING JOURNAL INCLUDING: WELDING RESEARCH, Bd. 74, Nr. 1, 1.Januar 1995, Seiten 39-45, XP000530420 CAMPBELL R D ET AL: "A GUIDE TO THE USE OF TUNGSTEN ELECTRODES FOR GTA WELDING"
- SCHWEISSEN UND SCHNEIDEN, Bd. 40, Nr. 1, 1988, Seiten 24-27, XP002006743 E BARWA ET AL.: "Betriebserfahrungen zum Verhalten von Wolframelektroden mit unterschiedlichen Oxidzusaetzen beim Wolfram-Inertgasschweissen"

## Beschreibung

Die Erfindung bezieht sich auf eine Emissionselektrode, bestehend aus einem Trägerkörper, der eine die Elektronenemission begünstigende, schmelzgesinterte Masse trägt und auf ein Verfahren zur Herstellung einer derartigen Emissionselektrode.

Aus der DE-PS 18 06 856 ist eine aus Wolfram mit Zusätzen aus Thorium gebildete nicht abschmelzende Elektrode zum sogenannten Wolfram-Inertgas-Schweißen (WIG) bekannt. Zur Erhöhung der Elektronen-Elektronen-Emissionsfähigkeit trägt diese Elektrode eine aus Thoriumdioxid bestehende Überzugsschicht. Diese Überzugsschicht ist auf der Elektrodenspitze durch Schmelzsintern aufgebracht. Obwohl sich derartige Elektroden in der Praxis gut bewährt haben, sind sie jedoch gegen eine mechanische Beanspruchung, wie solche während der Schweißarbeiten bei einer Werkstückberührung leicht vorkommen, recht empfindlich; die Masse bricht aus, so daß die Elektrode unbrauchbar wird. In dieser Patentschrift wurde auch schon vorgeschlagen, dem Thoriumdioxid andere Metalloxide beizufügen, um so den Sinterprozeß zu erleichtern. Hierzu verwendet man ein bei wesentlich geringerer Temperatur als das Thoriumdioxid schmelzendes Metalloxid. Es zeigte sich jedoch, daß bei der Verwendung solcher Metalloxide entweder die mechanische und/oder thermische Belastbarkeit und zum Teil auch die Elektronen-Emissionsfähigkeit nachläßt. Außerdem besteht die Gefahr, daß die bei hoher Betriebstemperatur schmelzflüssig oder teigig werdende Masse vom Trägerkörper abtropft.

Aus der DE 23 37 344 ist eine weitere Emissionselektrode bekannt, die aus einem Trägerkörper besteht, der eine die Elektronenemission begünstigende, aus einem Gemisch aus Thoriumdioxid und einem weiteren Metalloxid bestehende Thoriumdioxid und einem weiteren Metalloxid bestehende schmelzgesinterte Masse trägt. Um bei dieser bekannten Emissionselektrode ein Abtropfen der bei hoher Betriebstemperatur schmelzflüssig oder teigig werdenden Masse vom Trägerkörper zu verhindern, wird als die die Elektronenemission begünstigende Masse eine Mischung verwendet, die aus 33 bis 50 Gew.-% Thoriumdioxid und 4 bis 15 Gew.-% Aluminiumoxid besteht und in der 35 bis 63 Gew.-% Wolframpulver enthalten sind. Diese Masse wird zusammen mit ihrem hochwärmefesten Trägerkörper bis mindestens auf die eutektische Temperatur des Thoriumdioxid-Aluminiumoxid-Gemisches (1900°C), vorzugsweise jedoch bis über 2100°C erwärmt, worauf man die sich bildende, Wolframpulver enthaltende Schmelze sodann erstarren läßt. Die Zeit bis zum Erstarren der Schmelze laßt man dabei gleich oder kürzer, als sie der späteren Betriebsbedingung der Emissionselektrode entspricht.

Die aus der DE-PS 23 37 344 bekannte Elektrode besitzt neben einer hohen Elektronen-Elektronen-Emissionsfähigkeit auch eine gute thermische und mechanische Belastbarkeit. Der Zusatz des Wolframpulvers zur Masse gibt dieser bei hoher Temperatur eine relativ gute Standfestigkeit. Die aus den genannten Metalloxiden bestehende Masse geht zwar beim Erreichen der vergleichsweisen hohen eutektischen Temperatur in ihre Schmelzphase über; das in der Schmelze enthaltene Wolfram verhindert jedoch ein Tropfen der Masse; sie befindet sich in einem zähen, teigigen Zustand, der sich auch bei einer hohen thermischen Überbelastung der Elektrode kaum ändert. Selbst bei normalen Erschütterungen hält die Masse an ihrem Trägerkörper. Überraschend ist es, daß durch den hohen Anteil des Wolframpulvers an der Gesamtmasse sich die im wesentlichen durch die beiden Metalloxide bestimmte Elektronen-Emissionsfähigkeit kaum ändert, ja sogar verbessert wird. Dies ist darauf zurückzuführen, daß einerseits Anteile der Schmelze bei ihrem Abkühlen als Kristalle ausfallen und andererseits durch den hohen Anteil des Wolframpulvers die Oberfläche der Schmelze eine besonders rauhe Gestalt annimmt. Dadurch, nämlich durch Spitzenentladung und Vergrößerung der Oberfläche, wird die Elektronen-Elektronen-Emissionsfähigkeit insbesondere beim Zünden der Elektrode - also auch aus dem kalten Zustand heraus - wesentlich verbessert.

Nach neueren Erkenntnissen kann es bei der Herstellung der aus der DE-PS 23 37 344 bekannten Emissionelektrode und beim Arbeiten, insbesondere beim Schweißen, mit dieser Emissionselektrode durch den Gehalt an radioaktivem Thorium zu Gesundheitsschäden kommen.

Aus der DE-Z Schweißen und Schneiden 40 (1988) Heft 1, Seiten 24 bis 27 sind Untersuchungen bekannt, inwieweit thoriumoxid-bzw. zirkonoxidhaltige Wolframelektroden für das Wolfram-Inertgasschweißen durch solche mit Lanthanoxid- oder Ceroxidzugabe ersetzt werden können. Um die Elektronenemission zu erleichtern, werden bei derartigen Elektroden dem Wolfram oxidische Zusätze wie Thorium- oder Zirkonoxid in geringer Menge zugegeben, die in der Elektrode als feinverteilte Partikel in der Wolframmatrix vorliegen. Bei diesen Untersuchungen hat sich herausgestellt, daß sich Elektroden mit 1% Ceroxid ähnlich günstig verhalten, wie Elektroden mit 1% Thoriumoxid. Bei Zusatz von 2% Ceroxid ergeben sich jedoch bereits deutliche Verschlechterungen im Abbrandverhalten und in der Einsatzzeit gegenüber Elektroden von 2% Thoriumoxid. Eine Übertragung dieser Untersuchungsergebnisse auf Emissionselektroden mit Anteilen von 33 bis 50% Thoriumoxid in der die Elektronenemission begünstigenden Masse erscheint somit nicht möglich. Beim Trägerkörper derartiger Emissionselektroden könnte jedoch im Lichte der Untersuchungsergebnisse Thoriumoxid durch Lanthanoxid oder Ceroxid ersetzt werden.

Der im Anspruch 1 angegebenen Erfindung liegt das Problem zugrunde, die aus der DE-PS 23 37 344 bekannte Emissionelektrode so zu verbessern, daß einerseits durch den Verzicht auf radioaktive Komponenten eine Gesundheitsgefährdung ausgeschlossen werden kann und andererseits die hohe Elektronen-Emissionsfähigkeit sowie die gute thermische und mechanische Belastbarkeit nicht beeinträchtigt werden.

Der Erfindung liegt die Erkenntnis zugrunde, daß das Thoriumdioxid ohne Beeinträchtigung der wesentlichen Eigenschaften der die Elektronenemission begünstigenden Masse durch Ceroxid ersetzt werden kann.

Vorteilhafte Ausgestaltungen der erfindungsgemäßen Emissionselektrode gehen aus den Ansprüchen 2 bis 4 hervor.

Der Anspruch 5 gibt ein bevorzugtes Verfahren zur Herstellung einer Emissionselektrode an. Der Anspruch 6 betrifft eine bevorzugte Ausgestaltung dieses Verfahrens.

Ein Ausführungsbeispiel der Erfindung ist in der Zeichnung dargestellt und wird im folgenden näher beschrieben.

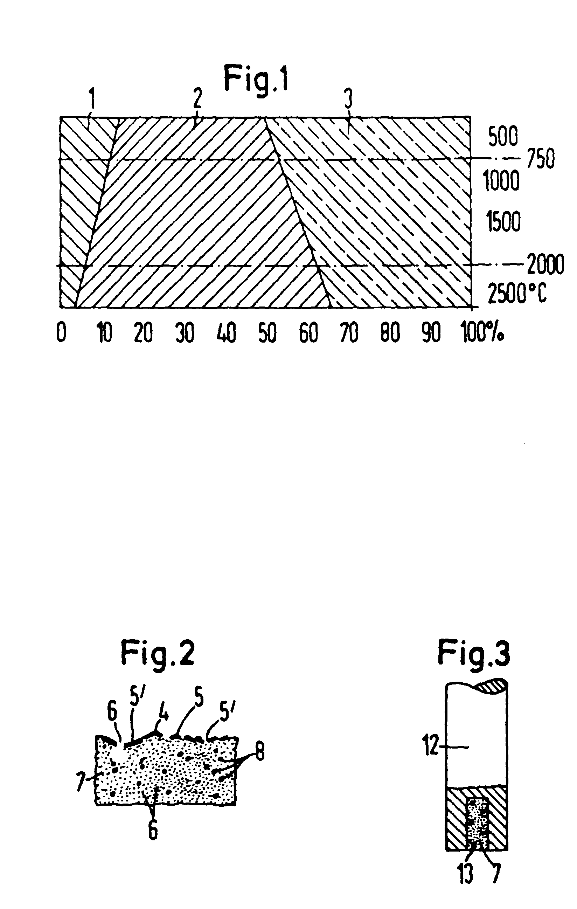

Figur 1 zeigt in Form eines Diagramms die mengenmäßige Zusammensetzung der Mischung in Abhängigkeit von der zu erwartenden Betriebstemperatur einer spezifischen Emissionselektrode.

Die einzelnen pulverförmigen Komponenten der Mischung, nämlich Aluminiumoxid und/oder Silberoxid 1, Wolfram 2 und Ceroxid 3, sollen so aufeinander abgestimmt werden, daß die Masse in Verbindung mit ihrem Trägerkörper bei der zu erwartenden spezifischen Betriebstemperatur der Elektrode neben einer optimalen Elektonen-Elektronen-Emissionsfähigkeit auch eine entsprechende thermische und mechanische Standfestigkeit bzw. Betriebssicherheit aufweist. Soll zum Beispiel die Emissionselektrode bei einer Betriebstemperatur von 2000°C arbeiten, so wählt man - um ein Tropfen der Masse zu vermeiden - den Anteil des Wolframs möglichst hoch, im vorliegenden Beispiel mit 53 Gew.-%. Für diesen Fall beträgt der Anteil des Ceroxids 40 Gew.-%, während der Anteil des Aluminiumoxids und/oder Silberoxids 7 Gew.-% beträgt. Soll indessen die Emissionselektrode beispielsweise bei einer Temperatur von 1000°C arbeiten, so betragen vorzugsweise die Anteile der Mischungskomponenten an der Gesamtmasse in der gleichen vorgenannten Reihenfolge 44 Gew.-%, 45 Gew.-% und 11 Gew.-%.

Die so geschaffene Masse wird nach erfolgtem Mischen in bekannter Weise, z.B. durch Pressen, Kleben, Sintern oder Stopfen mit ihrem Trägerkörper provisorisch verbunden. Je nach Art des Verwendungszweckes der Elektrode wird die Masse zusammen mit dem Trägerkörper bis mindestens auf die eutektische Temperatur des Metalloxidgemisches (1950°C), vorzugsweise jedoch bis über die Schmelztemperatur des höchstschmelzenden Metalloxides, hier des Aluminiumoxides (2050°C) bis auf eine Temperatur zwischen 1100°C und 2200°C erwärmt. Dabei wird das Eutektikum, sowie gegebenenfalls auch der überschüssige Anteil des Aluminiumoxids oder des Silberoxids, schmelzflüssig. Die Erwärmung des Trägerkörpers mit der Masse erfolgt entweder im Lichtbogen bzw. durch Zünden eines Lichtbogens oder durch Widerstandserwärmung, vereinzelt auch in einem mit Magnesiumoxid-Muffeln ausgekleideten Hochtemperaturofen. Wie vorstehend ausgeführt, ist es wichtig, daß die Kühlung des Trägerkörpers mit der Schmelze entsprechend den späteren Betriebsbedingungen erfolgt.

Figur 2 zeigt in einer zeichnerischen Darstellung und in einer stark vergrößerten Ansicht ein Schliffbild einer im Bereich der Oberfläche 4 schmelzgesinterten Masse 7. Die hier hellen Stellen erscheinen im Schliffbild dunkel. Die Oberfläche der Masse 7 ist bedingt durch das in der Masse enthaltene Wolfram 8 rauh und zeigt deutliche Erhebungen 5 und Vertiefungen 5'. In der Masse sind Kristalle 6 sichtbar, die je nach der Abkühlungsgeschwindigkeit der Schmelze eine unterschiedliche Größe aufweisen. Die für die Elektronen-Emissionsfähigkeit der Masse wesentliche Rauhheit der Oberfläche beträgt mindestens 100µm.

Figur 3 zeigt in einer vergrößerten Ansicht die Spitze einer aus Wolfram bestehenden Schweißelektrode 12; sie ist in einen Brenner eines zum WIG- oder Plasmaschweißen geeigneten Schweißbrenners einsetzbar. Die aus Wolfram mit 1% Lanthanoxid oder Wolfram mit 1% Ceroxid bestehende Schweißelektrode 12 besitzt eine Höhlung 13, in der die Masse 7 eingebettet ist. Das Schmelzsintern der Masse 7 erfolgt hier durch Zünden eines Lichtbogens, wobei man die Elektrodenspitze bis weit über den Temperaturbereich ihrer Arbeitstemperatur erhitzt. Wird während des Betriebs der Schweißelektrode 12 das in der Masse 7 enthaltene Eutektikum wiederum schmelzflüssig, ein Umstand, der bei hoher Strombelastung der Elektrode vorkommt, so verbleibt die Masse 7 durch den hohen Anteil des Wolframs in einem zähteigigen Zustand, so daß die Masse 7 sicher in der Höhlung 13 der Schweißelektrode 12 gehalten wird.

## Patentansprüche

1. Emissionselektrode, bestehend aus einem Trägerkörper, der eine die Elektronenemission begünstigende, schmelzgesinterte Masse (7) aus 4 bis 15 Gew.-% Aluminiumoxid und/oder Silberoxid (1), 35 bis 63 Gew.-% Wolfram (2) und 33 bis 50 Gew.-% Ceroxid (3) trägt.

2. Emissionselektrode nach Anspruch 1,
**dadurch gekennzeichnet,**
daß der Trägerkörper eine Schweißelektrode (12) ist, die aus mit Lanthanoxid legiertem Wolfram besteht.

3. Emissionselektrode nach Anspruch 1,
**dadurch gekennzeichnet,**
daß der Trägerkörper eine Schweißelektrode (12) ist, die aus mit Ceroxid legiertem Wolfram besteht.

4. Emissionselektrode nach Anspruch 2 oder 3,
**dadurch gekennzeichnet,**
daß die Masse (7) in einer Höhlung (13) der Schweißelektrode (12) eingebettet ist.

5. Verfahren zur Herstellung einer Emissionselektrode, bestehend aus einem Trägerkörper, der eine die Elektronenemission begünstigende Masse (7) trägt, die bei hoher Temperatur mit dem Trägerkörper durch Sintern verbunden wird, wobei man 33 bis 50 Gew.-% Ceroxid (3) 4 bis 15 Gew.-% Aluminiumoxid und/oder Silberoxid (1) beimischt und dieser Mischung 35 bis 63 Gew.-% pulverförmiges Wolfram (2) hinzufügt, die resultierende Masse (7) mindestens über den Schmelzpunkt des Ceroxid-Aluminiumoxid und/oder Silberoxid-Eutektikums (1950 °C) erwärmt und die sich bildende, pulverförmiges Wolfram (2) enthaltende Schmelze sodann zu einer Schmelz-Sintermasse erstarren läßt.

6. Verfahren nach Anspruch 5,
**dadurch gekennzeichnet,** daß die Masse (7) auf 2100°C erwärmt wird.

## Claims

1. Emission electrode, comprising a carrier which supports a melt-sintered mass (7) which promotes electron emission and consists of 4 to 15% by weight of aluminium oxide and/or silver oxide (1), 35 to 63% by weight of tungsten (2) and 33 to 50% by weight of cerium oxide (3).

2. Emission electrode according to Claim 1, characterized in that the carrier is a welding electrode (12) which consists of tungsten alloyed with lanthanum oxide.

3. Emission electrode according to Claim 1, characterized in that the carrier is a welding electrode (12) which consists of tungsten alloyed with cerium oxide.

4. Emission electrode according to Claim 2 or 3, characterized in that the mass (7) is embedded in a cavity (13) in the welding electrode (12).

5. Process for producing an emission electrode, comprising a carrier, which supports a mass (7) which promotes electron emission and at high temperature is joined to the carrier by sintering, 33 to 50% by weight of cerium oxide (3) and 4 to 15% by weight of aluminium oxide and/or silver oxide (1) being mixed and 35 to 63% by weight of pulverulent tungsten (2) being added to this mixture, the resulting mass (7) being heated to at least above the melting point of the cerium oxide-aluminium oxide and/or silver oxide eutectic (1950°C) and the melt formed, containing pulverulent tungsten (2), then being allowed to solidify to form a melt-sintered mass.

6. Process according to Claim 5, characterized in that the mass (7) is heated to 2100°C.

## Revendications

1. Electrode d'émission, constituée d'un support qui porte une masse (7) frittée par fusion, favorisant l'émission d'électrons, constituée de 4 à 15 % en poids d'oxyde d'aluminium et/ou d'oxyde d'argent (1), de 35 à 63 % en poids de tungstène (2) et de 33 à 50 % d'oxyde de cérium (3).

2. Electrode d'émission selon la revendication 1, caractérisée en ce que le support se compose d'une électrode de soudage (12) qui est constituée de tungstène allié avec de l'oxyde de lanthane.

3. Electrode d'émission selon la revendication 1, caractérisée en ce que le support est une électrode de soudage (12) qui se compose de tungstène allié à de l'oxyde de cérium.

4. Electrode d'émission selon les revendications 2 ou 3, caractérisée en ce que la masse (7) est incluse dans une cavité (13) de l'électrode de soudage (12).

5. Procédé de fabrication d'une électrode d'émission, constituée d'un support qui porte une masse (7) favorisant l'émission d'électrons, qui est liée à température élevée au support par frittage, à laquelle on mélange 33 à 50 % en poids d'oxyde de cérium (3), 4 à 15 % en poids d'oxyde d'aluminium et/ou d'oxyde d'argent (1), et on ajoute à ce mélange 35 à 63 % en poids de tungstène pulvérulent (2), on chauffe la masse (7) obtenue au moins au-dessus du point fusion de l'eutectique oxyde de cérium-oxyde d'aluminium et/ou oxyde d'argent (1950 °C) et on laisse ensuite refroidir la masse fondue qui se forme, contenant du tungstène pulvérulent (2), pour donner une masse de frittage par fusion.

6. Procédé selon la revendication 5, caractérisé en ce qu'on chauffe la masse (7) à 2100 °C.
